# EUROPEAN PATENT SPECIFICATION

(11) **EP 2 769 309 B1**
(45) Date of publication and mention of the grant of the patent: **31.07.2019**
(21) Application number: 12842516.2
(22) Date of filing: 18.10.2012
(51) Int. Cl.: G06F 15/16

(54) **METHOD AND APPARATUS FOR SHARING CONTENTS BETWEEN DEVICES**
VERFAHREN UND VORRICHTUNG ZUR GEMEINSAMEN NUTZUNG VON INHALTEN ZWISCHEN VORRICHTUNGEN
PROCÉDÉ ET APPAREIL DE PARTAGE DE CONTENUS ENTRE DES DISPOSITIFS

(30) Priority: 21.10.2011 KR 20110108135
(43) Date of publication of application: 27.08.2014
(73) Proprietor: Samsung Electronics Co., Ltd., Suwon-si, Gyeonggi-do 443-742 (KR)
(72) Inventor: PARK, Hyun-Cheol, Suwon-si Gyeonggi-do 443-373 (KR); KIM, Jin-Hyoung, Hwaseong-si Gyeonggi-do 445-710 (KR); KWON, Joon-Hwan, Suwon-si Gyeonggi-do 443-740 (KR); YOON, Won-Shik, Suwon-si Gyeonggi-do 442-833 (KR); LEE, Jin-Wook, Yongin-si Gyeonggi-do 448-914 (KR)
(74) Representative: HGF Limited
(86) International application number: PCT/KR2012/008567
(87) International publication number: WO 2013/058584

(56) References cited:
- US-A1- 2006 098 588
- US-A1- 2006 168 065
- US-A1- 2009 037 529
- US-A1- 2009 081 950
- US-A1- 2009 094 317

## Description

### Technical Field

The present disclosure relates to a method and apparatus for sharing contents between devices.

### Background Art

The development of information communication technologies results in the spread of a home network system for implementing in-door information devices such as a Television (TV), a Personal Computer (PC), and a mobile terminal by using a network and for integrally managing the devices. Document US 2009/081950 A1 (MATSUBARA TAKASHI [JP] ET AL) 26 March 2009 (2009-03-26) discloses a content display method, system and apparatus wherein viewing of a content on a portable terminal is smoothly passed to an information processing apparatus.

Accordingly, there is a need to propose a technique capable of more effectively sharing contents between devices in a home network and capable of providing real-time control between the sharing devices.

### Disclosure of Invention

### Solution to Problem

To address the above-discussed deficiencies of the prior art, it is a primary object to provide at least the advantages described below. Accordingly, an aspect of the present disclosure is to provide a method and apparatus for sharing web contents between devices.

Another aspect of the present disclosure is to provide a method and apparatus for sharing web contents between devices by using Uniform Resource Locator (URL) information of the web contents.

Another aspect of the present disclosure is to provide a method and apparatus for controlling a user interface of a peer device on a real-time basis in such a manner that a device which requests to share web contents transitions to a control mode for operating as an input element of the peer device when web contents are shared between the devices.

Another aspect of the present disclosure is to provide a method and apparatus for controlling a peer device in such a manner that at least one of a voice, touch, and motion of a user is recognized by a device which requests to share web contents, when web contents are shared between the devices.

In accordance with an aspect of the present disclosure, a method for sharing contents between a device and peer devices in a home network system is provided. The method includes, in the device: reproducing the contents; searching for a peer device capable of receiving the contents for content sharing; transmitting a sharing request signal including location information of the contents to the peer device so that the peer device locates the contents and displays the contents; receiving information on at least first and second supported input means from the peer device; transitioning to a control mode for controlling the peer device while transmitting the sharing request signal; and, while in the control mode: operating as a first input means; detecting a user control command by using at least one sensor; transmitting a control signal corresponding to the detected control command to the peer device; receiving a request to change the input means from the peer device; and operating as a second input means.

In accordance with another aspect of the present disclosure, a method for sharing contents in a home network system is provided. The method includes, at a peer device: transmitting a signal to a device for indicating that the contents can be received by the peer device for content sharing; receiving a sharing request signal including location information of the contents from the device; displaying the contents after receiving the contents using the location information; transmitting information on at least first and second supported input means to the device; receiving a control signal from the device; controlling a display of the contents in accordance with the control signal; and transmitting a request to change the input means to the device.

In accordance with another aspect of the present disclosure, a device for sharing contents between the device and peer devices in a home network system is provided. The device comprises a controller configured to: provide control to reproduce the contents; search for a peer device capable of receiving the contents for content sharing; transmit a sharing request signal including location information of the contents to the peer device so that the peer device locates the contents and displays the contents; receive information on at least first and second supported input means from the peer device; transition to a control mode for controlling the peer device while transmitting the sharing request signal; and, while in the control mode: detect a user control command by using at least one sensor; transmit a control signal corresponding to the detected control command to the peer device; receive a request to change the input means from the peer device; and operate as a second input means. The device further includes a communication unit configured to transmit and receiving a signal with the peer device under the control of the controller.

In accordance with another aspect of the present disclosure, a sharing device for sharing contents in a home network system is provided. The device comprises: a display unit; a controller configured to provid control to transmit a signal to a device for indicating that contents can be received by the sharing device, to receive a sharing request signal including location information of the contents from the device and thereafter to display, on the display unit, the contents after receiving the contents using the location information, to transmit information on at least first and second supported input means to the device; to receive a control signal from the device, to control a display of the contents in accordance with the control signal, and to transmit a request to change the input means to the device; and a communication unit for transmitting and receiving a signal with the device under the control of the controller.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### Brief Description of Drawings

For a more complete understanding of the present disclosure and its advantages, reference is now made to the following description taken in conjunction with the accompanying drawings, in which like reference numerals represent like parts:
FIGURE 1 illustrates a system for sharing a web page between devices according to an exemplary embodiment of the present disclosure;
FIGURE 2 is a flowchart illustrating a process of sharing a web page between devices according to an exemplary embodiment of the present disclosure;
FIGURE 3 is a block diagram illustrating a structure of a mobile terminal according to an exemplary embodiment of the present disclosure;
FIGURE 4 is a block diagram illustrating a structure of a sharing device according to an exemplary embodiment of the present disclosure;
FIGURE 5 is a flowchart illustrating an operation of a mobile terminal for sharing a web page according to an exemplary embodiment of the present disclosure;
FIGURE 6 is a flowchart illustrating an operation of a device for sharing a web page according to an exemplary embodiment of the present disclosure;
FIGURES 7A and 7B illustrate a screen configuration for sharing a web page according to an exemplary embodiment of the present disclosure; and
FIGURES 8A to 8C> illustrate an example of controlling a device by a mobile terminal which operates as an input element according to an exemplary embodiment of the present disclosure.

### Best Mode for Carrying out the Invention

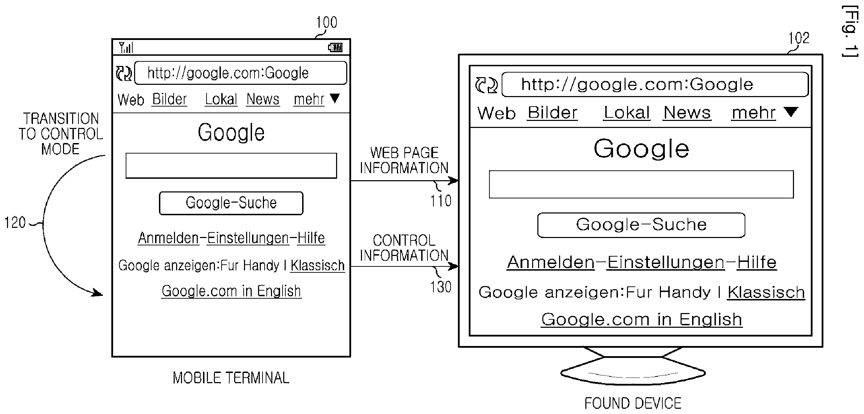

FIGURES 1 through 8C, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged network. Exemplary embodiments of the present disclosure will be described herein below with reference to the accompanying drawings. In the following description, well-known functions or constructions are not described in detail since they would obscure the subject matter of the present disclosure with unnecessary detail. Also, the terms used herein are defined according to the functions of the present disclosure. Thus, the terms may vary depending on user's or operator's intention and usage. That is, the terms used herein must be understood based on the descriptions made herein.

A Digital Living Network Alliance (DLNA) network has drawn attention as a home network system. The DLNA network connects a plurality of digital devices to each other through a Wireless Local Area Network (WLAN), and allows to share various contents (e.g., music, photos, movies, etc.) stored in the respective digital devices. Therefore, a mobile terminal which supports the DLNA network can share contents desired by a user in such a manner that the mobile terminal detects all devices connected to a network accessed by the mobile terminal through the WLAN according to a DLNA service request of the user and receives desired contents from the detected devices or transmits contents stored in the mobile terminal to the detected devices.

In particular, in one possible method, the mobile terminal directly transmits contents being reproduced in the device of the mobile terminal to a peer device so that the contents are reproduced in the peer device. Although this method has an advantage in that the contents of the mobile terminal can be reproduced in another device, it has a limitation in satisfying various demands of the user. For example, when assuming a case where the mobile terminal delivers an image displayed on a screen to a TV and displays the image according to the conventional method, since the image has a resolution suitable for a screen size of the mobile terminal, there is a problem in that the user feels as if the image displayed on the TV is not intact.

In addition, there is another problem in that a Universal Plug and Play (UPnP) protocol used in DLNA networks is not suitable for data processing that requires a fast response on a real-time basis.

The present disclosure relates to a technique by which web contents are shared between devices, and one device controls other devices when sharing web content. The web content includes all content having a Uniform Resource Locator (URL) on a web. Examples of the web content include a web page, a web magazine (or an e-magazine), a web video, a web game, etc. For convenience of explanation, the present disclosure uses the web page as an example. However, the principles of the present disclosure apply equally to all content provided on the web. In addition, for convenience of explanation, it will be assumed in the present disclosure that a device that requests to share the web content is a mobile terminal. However, the principles of the present disclosure apply equally to a case of sharing web content with a device other than a mobile terminal. The mobile terminal may be a mobile device operating within a Digital Living Network Alliance (DLNA) network together with a DLNA device. Examples of the mobile terminal include a smart phone, a tablet Personal Computer (PC), a notebook PC, etc. The DLNA device may be an in-door digital device. Examples of the DLNA device include a Television (TV), a PC, etc.

FIGURE 1 illustrates a system for sharing a web page between devices according to an exemplary embodiment of the present disclosure.

Referring to FIGURE 1, a mobile terminal 100 transmits a signal for searching for a device which supports a function of sharing web contents, and searches for a neighboring device 102 which supports the function of sharing the web page. Thereafter, the mobile terminal 100 transmits a web page sharing request signal including web page information to the found device 102 according to a user request (step 110). Herein, the web page information implies location information (i.e., a URL) of the web page. Thereafter, the mobile terminal 100 transitions to a control mode for operating as an input element of the found device 102 (step 120), and transmits control information corresponding to user input data to the found device 102. Herein, the user input data implies a user's operation and voice that can be detected by using various sensors in the mobile terminal. For example, the user input data implies at least one of a user's touch coordinate which is input by using a touch sensor, a user motion vector detected by using a gyro sensor and an acceleration sensor, a user voice signal which is input by using a microphone sensor, and a motion vector depending on a change in an image which is input by using a camera sensor.

Upon receiving a device search signal which supports a web page sharing function from the mobile device 100, the device 102 transmits a response signal for the received signal to the device. Thereafter, the device 102 receives a web page sharing request signal including web page information from the mobile terminal 100 (step S110). Herein, the web page information implies a URL of the web page. Thereafter, the device 102 accesses to the URL of the web page by executing a web browser at the request of the mobile terminal 100, loads the web page, and displays the web page on a screen. In this case, the web page displayed on the screen of the device 102 has a resolution optimized to a screen size of the device 102. That is, the device 102 may load a web page having a resolution corresponding to the screen size of the device 102 from the URL through the web browser, or may load the web page from the URL and then display the web page by changing a resolution of the loaded web page into a resolution corresponding to the screen size of the device 102. As such, the device 102 can provide a high-quality image to a user by displaying the web page having the resolution corresponding to the screen size. After displaying the web page, the device 102 performs an operation of receiving control information from the mobile terminal 100 and controlling the web page according to the received control information. For example, according to the control information received from the mobile terminal 100, the device 102 can perform an operation of moving a mouse cursor on the web page or inputting a character into a character input window of the web page.

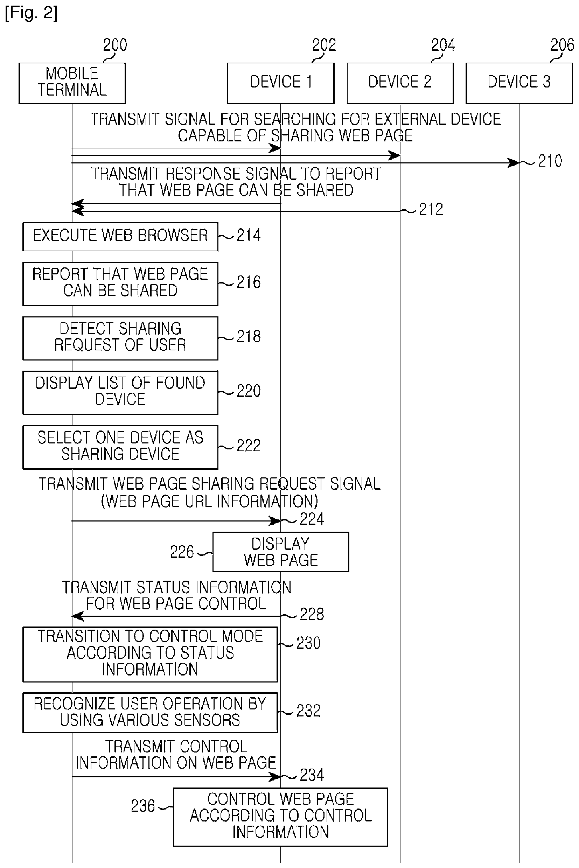

FIGURE 2 is a flowchart illustrating a process of sharing a web page between devices according to an exemplary embodiment of the present disclosure.

Referring to FIGURE 2, a mobile terminal 200 transmits a signal for searching for a device capable of sharing the web page in step 210. Then, devices 202 to 206 connected to the same DLNA network as the mobile terminal 200 receive the signal for searching for the device capable of sharing the web page, and determine whether the devices support a web page sharing function. If it is assumed that the device #1 202 and the device #2 204 support the web page sharing function, in step 212, the device #1 202 and the device #2 204 transmit a response signal to the mobile terminal 200 to report that web page can be shared. In this case, the mobile terminal 200 recognizes that the device #1 202 and the device #2 204 support the web page sharing function, and generates a device list including the device #1 202 and the device #2 204.

Thereafter, when a web browser is executed in step 214 according to a user control, the mobile terminal 200 loads a specific web page and displays the web page on a screen. In step 216, the mobile terminal 200 reports to the user that the web page can be shared. In this case, the mobile terminal 200 may display an icon or message for indicating that the web page can be shared on the screen or may generate a predetermined alarm sound. Thereafter, when a web page sharing request of the user is detected in step 218, the mobile terminal 200 displays the pre-generated device list on the screen in step 220, and proceeding to step 222, selects one device according to the user control. Herein, when the user selects a sharing icon displayed on the screen or inputs a predetermined function key or a voice signal, the mobile terminal 200 may detect that sharing of the web page is requested by the user. In addition, when only one device exists in the pre-generated device list, the mobile terminal 200 may skip the steps 220 and 222.

In step 224, the mobile terminal 200 transmits a web page sharing request signal including URL information on the web page to the selected device #1 202. Then, upon receiving the web page sharing request signal, the device #1 202 executes a web browser in step 226, and loads a corresponding web page by accessing to a URL for the web page through the web browser, and thereafter displays a web page having a resolution corresponding to a screen size of the device #1 202 on the screen. Herein, the resolution corresponding to the screen size may be an optimal resolution recommended and supported by the device #1 202 and determined in the designing of the device #1 202, or may be a resolution configured to the resolution of the device #1 202 by the user. In step 228, the device #1 202 confirms status information for the web page control, and transmits the status information to the mobile terminal 200. Herein, the status information for the web page control may be information on whether the web browser is normally executed, information on whether the web page is completely loaded, and information on a supported input means. Herein, the supported input means implies an input means that can be supported by the device #1 202 among several input means such as a touch mouse, a motion mouse, a keyboard (or a keypad or a touch pad), a microphone, etc.

In step 230, the mobile terminal 200 analyzes the status information received from the device #1 202 to determine whether the device #1 202 has successfully loaded the web page, and if it is determined that the loading is successful, transitions to a control mode supported by the device #1 202. For example, when the device #1 202 supports a touch mouse and a keyboard as an input means, the mobile terminal 200 can transition to a control mode for operating as the touch mouse or a control mode for operating as the keyboard. Herein, if it is determined that the device #1 202 fails to successfully load the web page due to an abnormal operation of the web browser as a result of analyzing the status information, the mobile terminal 200 may retransmit a web page sharing request signal to the device #1 202 or may report a web page sharing failure to the user.

Upon transitioning to the control mode, the mobile terminal 200 recognizes a user operation and voice corresponding to the control mode by using various sensors equipped in the mobile terminal in step 232, and transmits control information on the web page to the device #1 202 in step 234. For example, in case of the control mode in which the mobile terminal operates as the touch mouse, the mobile terminal 200 displays a message for indicating that it operates as the touch mouse on the screen, and detects a touch coordinate of the user by using a touch sensor and transmits the detected touch coordinate to the device #1 202. In this case, the mobile terminal 200 may transmit the detected touch coordinate directly to the device #1 202, or may transmit the detected touch coordinate by changing it by the use of a screen coordinate of the device #1 202 or a predetermined command (e.g., screen zoom in/out, screen rotation, go back to previous page, color change, etc.). For another example, in case of the control mode in which the mobile terminal 200 operates as a motion mouse, the mobile terminal 200 may calculate a motion vector by detecting a motion of the mobile terminal according to a user operation by using a gyro sensor and an acceleration sensor, and may transmit the motion vector directly to the device #1 202 or may transmit the motion vector to the device #1 202 by changing it on the basis of a coordinate of the screen or a predetermined command.

In step 236, the device #1 202 controls the web page according to the control information. For one example, when coordinate data is received from the mobile terminal 200, the device #1 202 displays a mouse cursor for controlling the web page by moving the cursor to a location corresponding to the coordinate data. For another example, when character data is received from the mobile terminal 200, the device #1 202 performs a function of inputting the received character data into a character input window of the displayed web page. For another example, if a screen zoom in/out command is received from the mobile terminal 200, the device #1 202 performs a function of displaying the web page by increasing or decreasing the web page.

Although not shown herein, the device #1 202 may determine whether the input means needs to be changed, and then may request the mobile terminal 200 to change the input means. For example, if the mouse cursor exists in the character input window of the web page while the device #1 202 performs an operation for controlling the web page according to control information of the mobile terminal 200 which operates as the motion mouse, the mobile terminal 200 can be requested to transition to a microphone or keyboard operation mode for inputting a character.

In addition, although signals transmitted and received for sharing a web page between the mobile terminal 200 and the device may use a Universal Plug and Play (uPnP) protocol in steps 210, 212, 224, and 228, a signal transmitted and received for web page control needs to use a non-uPnP protocol. This is because the uPnP is not suitable for data processing which requires a fast response on a real-time basis.

In addition, although it is described above that the respective devices examine whether the devices support the web paging sharing function and then transmit a response signal to the mobile terminal, the present disclosure is not limited thereto. Thus, according to a design rule, when functions supported by the respective devices are transmitted to the mobile terminal, the mobile terminal may analyze the functions supported by the respective devices to identify devices which can share a web page.

Now, a structure and operation of a mobile terminal and a device according to the present disclosure will be described on the basis of the aforementioned explanations.

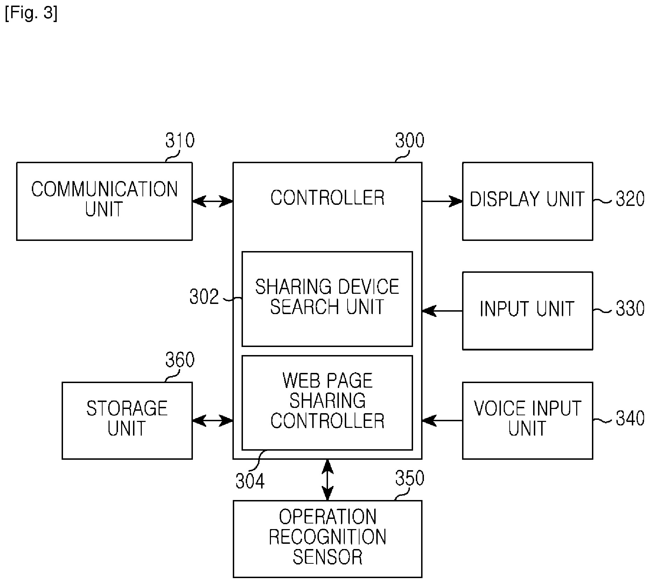

FIGURE 3 is a block diagram illustrating a structure of a mobile terminal according to an exemplary embodiment of the present disclosure.

Referring to FIGURE 3, the mobile terminal includes a controller 300, a communication unit 310, a display unit 320, an input unit 330, a voice input unit 340, an operation recognition sensor 350, and a storage unit 360. In particular, the controller 300 includes a sharing device search unit 302 and a web page sharing controller 304.

First, the controller 300 controls and processes an overall operation of the mobile terminal, and according to the present disclosure, controls and processes a function for sharing a web page. That is, the controller 300 searches for neighboring devices capable of sharing the web page by using the sharing device search unit 302. Further, the controller 300 transmits web page information by selecting a web page sharing device on the basis of the found devices by using the web page sharing controller 304, and controls and processes a function for operating as an input element of the device.

More specifically, the sharing device search unit 302 controls the communication unit 310 to control and process a function of searching for a device capable of sharing a web page from devices connected to a DLNA network to which the mobile terminal is currently accessed. In this case, the sharing device search unit 302 may transmit a signal for searching for a device capable of sharing a web page to the devices connected to the DLNA network, and may determine devices which transmit a response signal for the device search signal as the device capable of sharing the web page. Further, the sharing device search unit 302 may transmit a signal for requesting information on a supportable service function to the devices connected to the DLNA network, may receive a signal for reporting a supportable service function from each of the devices, and thereafter may search for a device which supports a web page sharing function by using the signal for reporting the supportable service function. Herein, the sharing device search unit 302 may import a predetermined API set to search for a device which supports a web page sharing function. For example, the sharing device search unit 302 may use a UPnP or non-UPnP-based API to transmit to devices connected to the DLNA network a signal for requesting a search for a device capable of sharing a web page. In addition, the sharing device search unit 302 may use a Web Browser Enable Device List signal for generating a list of devices capable of sharing a web page to receive and analyze a response signal with respect to a signal for searching for the device capable of searching for the web page. Thus, the sharing device search unit 302 may acquire information of the device which supports the web page sharing function.

When the device capable of sharing the web page is found, the sharing device search unit 302 generates a sharing device list including the found devices, and stores the sharing device list into the storage unit 360. Herein, the device search and list generation function of the sharing device search unit 302 can be performed with a specific period in a situation where the mobile terminal is currently connected to the DLNA network, and may be performed whenever a new device is connected to or disconnected from the DLNA network.

When a web browser is executed by the user, the web page sharing controller 304 controls and processes a function for loading a specific web page and displays the web page on a screen, confirming the sharing device list stored in the storage unit 360, and reporting whether the web page can be shared to the user. The web page sharing controller 304 may control the display unit 320 to display an icon or message for indicating that the web page can be shared, or may control an audio output unit (not shown) to generate an alarm sound for indicating that the web page can be shared. When a web page sharing request of the user is detected by using the input unit 330, the web page sharing controller 304 displays the sharing device list on the screen, and determines a sharing device according to a user control. Herein, the web page sharing controller 304 may import a predetermined API set to display a sharing device list on a screen. For example, the web page sharing controller 304 may provide a high-level application (e.g., a web browser) with a Web Browser Enable Device Request including a sharing device list to display the sharing device list on the screen.

When the sharing device is determined, the web page sharing controller 304 controls and processes a function for transmitting to a selected device a web page sharing request signal including URL information for a web page currently being displayed. Thereafter, when status information including information on web page loading and information on a supported input means is received from the device, the web page sharing controller 304 transitions to a control mode for operating as a supported input means of the device to control and process a function of recognizing a user's voice or operation according to the control mode and of generating control information and transmitting the generated control information to the device. That is, the web page sharing controller 304 recognizes the user's voice by using the voice input unit 340 according to the control mode or recognizes a user's touch and motion by using the operation recognition sensor 350, and generates control information on the basis of the recognition result and then transmits the generated control information to the device. In this case, the web page sharing controller 304 may directly transmit the recognition result to the sharing device, or may convert the recognition result into data having a format that can be processed by the sharing device and then transmit the data to the sharing device. For example, if the sharing device is a device capable of performing a complex computation, the web page sharing controller 304 directly transmits the recognition result so that it can be converted into a format desired by the sharing device. Otherwise, if the sharing device is not capable of performing the complex computation, the web page sharing controller 304 may transmit the recognition result by converting it into the format desired by the sharing device. Herein, the web page sharing controller 304 transmits a URL to the sharing device on the basis of a predetermined API and action function, and thus controls the sharing device to execute a web browser and to load the URL. For example, a predetermined GetCurrentURL function is used to acquire URL information on a web page currently being displayed in the mobile terminal, and thereafter a RunBrowser(URL) API including the acquired URL information is used to deliver the URL information to the sharing device. In addition, the web page sharing controller 304 may use a BrowserStateEvent API to receive status information from the device, and may use a Device State function to acquire the received status information. Further, the web page sharing controller 304 may analyze data which is input by using at least one sensor included in the mobile terminal to process the data into data or commands for indicating an event desired by a user, and may deliver SendCommand(CMD) including the processed data or commands to the sharing device to control a web page display of the sharing device. Furthermore, the web page sharing controller 304 may use EnventListener to receive information on an event generated by the sharing device.

The communication unit 310 performs a function for transmitting and receiving a signal with respect to a neighboring device under the control of the controller 300. That is, the communication unit 310 performs a function for transmitting and receiving a signal to connect a DLNA network under the control of the controller 300, searching for a device which can share a web page among neighboring devices connected to the DLNA network, transmitting and receiving a signal for sharing the web page with the found device, and transmitting control information to the device which shares the web page.

The display unit 320 displays a variety of status information, characters, and images generated while the mobile terminal is operating. When a web browser is executed under the control of the controller 300, the display unit 320 displays the web page, and displays an icon or message for reporting that the web page can be shared. The display unit 320 performs a screen display corresponding to a control mode currently being operated under the control of the controller 300. For example, in a mode in which the mobile terminal operates as a keyboard for a peer device, the display unit 320 may display a character input screen configured similarly to the keyboard, and in a mode in which the mobile terminal operates as a motion mouse for the peer device, may display a screen including the mouse. Herein, a display image of the display unit 320 based on the control mode according to which the mobile terminal operates can variously change depending on a design rule.

The input unit 330 includes at least one of a function key and a touch sensor, and provides the controller 300 with data corresponding to a key pressed by the user or a coordinate corresponding to a position touched by the user.

The voice input unit 340 receives a user's voice signal and converts it into a digital signal, and thereafter provides the converted signal to the controller 300.

The operation recognition sensor 350 implies various sensors for recognizing a user's operation, and includes a sensor capable of detecting a user's motion. Examples of the sensor include a gyro sensor, an acceleration sensor, a touch sensor, and a camera sensor. The operation recognition sensor 350 is driven under the control of the controller 300, and recognizes a user's touch operation, or detects a terminal's direction, angle, acceleration variation, etc., caused by the user's motion and provides the detection result to the controller 300.

The storage unit 360 stores various programs and data required for an operation of the mobile terminal, and according to the present disclosure, stores a sharing device list provided from the controller 300. Herein, the sharing device list may be updated every specific period under the control of the controller 300. The sharing device list includes a device IDentifier (ID) and a device name, and may include a variety of information required for communication with a corresponding device.

The method described above in relation with FIG. 1 under of the present invention may be provided as one or more instructions in one or more software modules stored in the respective mobile terminals.

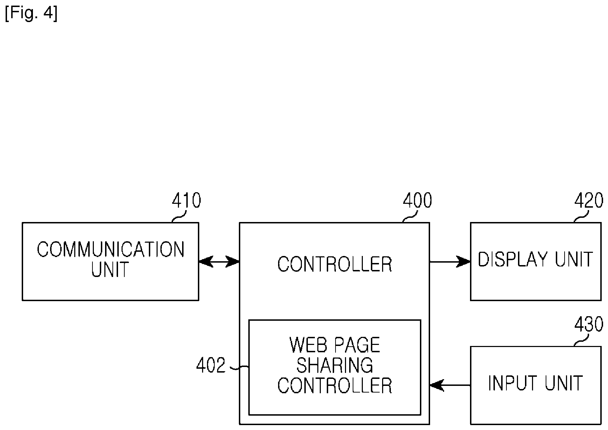

FIGURE 4 is a block diagram illustrating a structure of a sharing device according to an exemplary embodiment of the present disclosure.

Referring to FIGURE 4, the device includes a controller 400, a communication unit 410, a display unit 420, and an input unit 430. In particular, the controller 400 includes a web page sharing controller 402.

The controller 400 controls and processes an overall operation of the device, and according to the present disclosure, controls and processes a function for sharing a web page of a mobile terminal. That is, after reporting to the mobile terminal that the web page can be shared by using the web page sharing controller 402, the controller 400 controls and processes a function for receiving information on the web page from the mobile terminal and displaying the web page on a screen, and receiving control information from the mobile terminal and performing a control operation for the web page.

More specifically, when a signal for searching for a device which can share the web page is received from the mobile terminal through the communication unit 410, the web page sharing controller 402 controls and processes a function for transmitting a response signal for reporting that the web page can be shared to the mobile terminal. In this case, the web page sharing controller 402 may transmit a signal for reporting a service function that can be supported by the device.

When a web page sharing request signal including URL information for the web page is received from the mobile terminal, the web page sharing controller 402 controls and processes a function for loading the web page by accessing to the URL through a web browser and thereafter displaying the web page by using the display unit 420. In this case, the web page sharing controller 402 controls and processes a function for generating status information indicating whether the web browser is normally executed, whether the web page is completely loaded, and a supported input means, and transmitting the generated information to the mobile terminal. Herein, the input means may be a touch mouse, a motion mouse, a keyboard (or a keypad or a touch pad), a microphone, etc. The web page sharing controller 402 controls and processes a function for transmitting information on the input means supported by the device to the mobile terminal among the aforementioned input means.

In addition, when the control information is received from the mobile terminal, the web page sharing controller 402 performs a function for controlling the web page according to the control information. For one example, when coordinate data is received from the mobile terminal, the web page sharing controller 402 controls and processes a function for displaying a mouse cursor which controls the web page by moving the mouse cursor to a position corresponding to the coordinate data, and when character data is received from the mobile terminal 200, the web page sharing controller 402 controls and processes a function for inputting the received character data into a character input window of the displayed web page. For another example, when a screen zoom in/out command is received from the mobile terminal, the web page sharing controller 402 controls and processes a function for displaying the web page by increasing or decreasing the web page.

The communication unit 410 performs a function for transmitting and receiving a signal with respect to a neighboring device under the control of the controller 400. In particular, the communication unit 410 performs signal transmission and reception for connecting a DLNA network under the control of the controller 400, and transmits a signal for reporting that the web page can be shared to the mobile terminal connected to the DLNA network. In addition, the communication unit 410 performs a function for receiving web page control information and a web page sharing request signal including information on the web page from the mobile terminal and for providing the received information and signal to the controller 400.

The display unit 420 displays a variety of status information, characters, and images generated while the device is operating, and according to the control of the controller 400, displays a web page corresponding to a URL received from the mobile terminal. In this case, under the control of the controller 400, the display unit 420 displays a web page having a resolution corresponding to a screen size of the device. In addition, under the control of the controller 400, the display unit 420 performs a function for displaying a mouse cursor which controls the web page by moving the mouse cursor to a coordinate corresponding to control information of the mobile terminal or for displaying a character corresponding to the control information of the mobile terminal into a character input window of the web page.

The input unit 430 includes at least one of a function key and a touch sensor, and provides the controller 400 with data corresponding to a key pressed by the user or a coordinate corresponding to a position touched by the user.

The method described above in relation with FIG. 1 under of the present invention may be provided as one or more instructions in one or more software modules stored in the respective device.

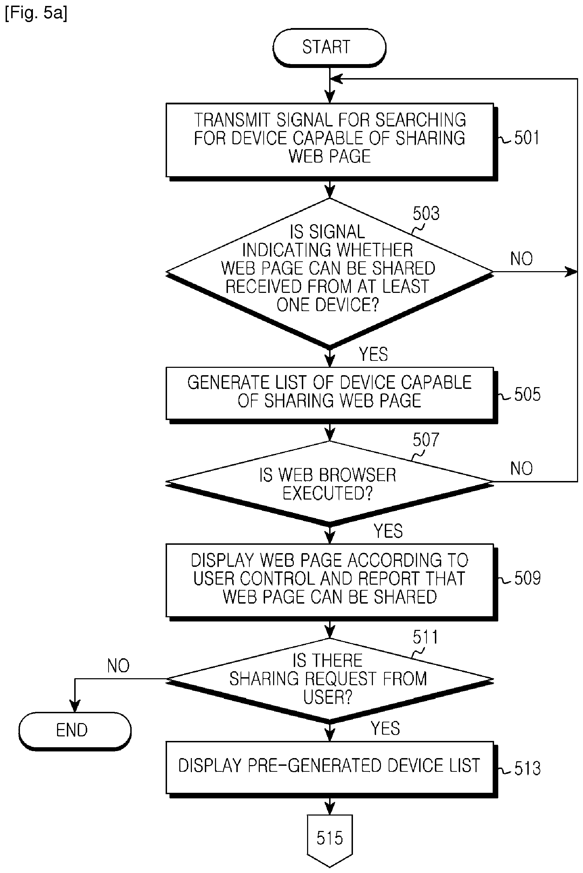

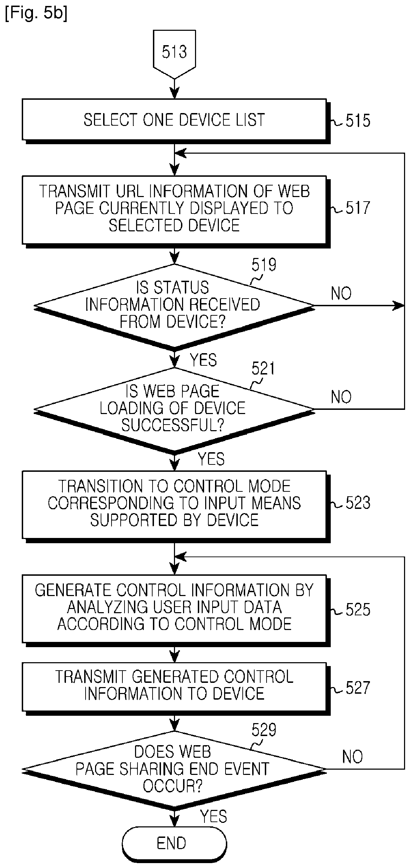

FIGURE 5 is a flowchart illustrating an operation of a mobile terminal for sharing a web page according to an exemplary embodiment of the present disclosure.

Referring to FIGURE 5, the mobile terminal transmits a signal for searching for a device which can share the web page in step 501. In this case, the signal for searching for the device which can share the web page is transmitted to devices connected to a DLNA network to which the mobile terminal is connected. In step 503, the mobile terminal determines whether a signal for indicating that the web page can be shared is received from at least one device. If the signal for indicating that the web page can be shared is not received from the at least one device, the mobile terminal waits by a predetermined time. Then, returning to step 501, the subsequent steps are repeated.

Otherwise, if the signal for indicating that the web page can be shared is received from the at least one device, proceeding to step 505, the mobile terminal confirms devices which can share the web page on the basis of the received signal, and generates and stores a sharing device list including the confirmed devices.

In step 507, the mobile terminal determines whether a web browser is executed according to a user control. If the web browser is not executed, the mobile terminal waits by a predetermined time. Then, returning to step 501, the subsequent steps are repeated.

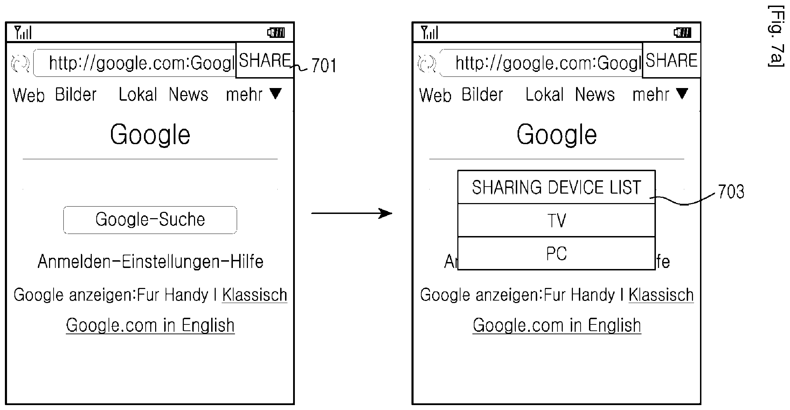

Otherwise, if the web browser is executed, in step 509, the mobile terminal displays a web page according to a user control, and reports to the user that the web page can be shared. In this case, the mobile terminal 200 may display an icon or message on a screen to indicate that the web page can be shared, or may generate a predetermined alarm sound. For example, as illustrated in FIGURE 7A, the mobile terminal displays an icon 701 for reporting that the web page can be shared at a specific position of the screen on which the web page is displayed.

In step 511, the mobile terminal determines whether sharing of the web page is requested by the user. That is, the mobile terminal selects the icon 701 displayed on the screen or determines whether a function key predetermined to share the web page is input by the user. If the user does not request the sharing of the web page, the procedure of FIGURE 5 ends.

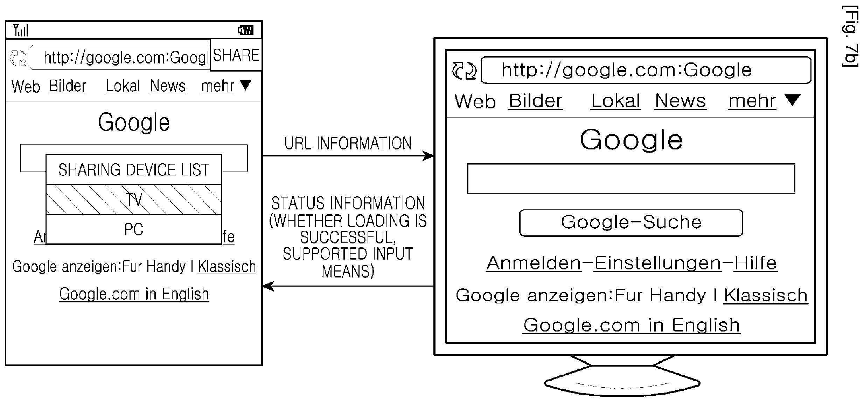

Otherwise, if the sharing of the web page is requested by the user, proceeding to step 513, the mobile terminal displays the pre-generated sharing device list on the screen. For example, as illustrated in FIGURE 7A, the mobile terminal displays a sharing device list 703 at a position of the screen on which the web page is displayed. In step 515, the mobile terminal selects one device for sharing the web page from devices included in the sharing device list according to the user control. For example, as illustrated in FIGURE 7B, the mobile terminal can select a TV according to the user control. Herein, in a case where one device exists in the sharing device list, if the user requests the sharing of the web page, the procedure may directly proceed to step 517 by skipping steps 513 and 515.

In step 517, the mobile terminal requests to share the web page by transmitting a signal including URL information for the web page currently being displayed. In step 519, the mobile terminal determines whether status information for controlling the web page is received from the device. If the status information is not received, returning to step 517, the mobile terminal may retransmit the web page sharing request signal to the device. If the status information is received, proceeding to step 521, the mobile terminal determine whether loading of the web page is successfully completed by the device. If the loading of the web page is not successfully completed by the device, returning to step 517, the mobile terminal may retransmit the web page sharing request signal. Herein, if the device continuously fails to load the web page, the mobile terminal may report to the user that the web page cannot be shared with the device, and may request to select another device to share the web page. For example, as illustrated in FIGURE 7B, the mobile terminal may transmit URL information of a current web page to a TV selected by the user, and may receive status information for controlling the web page and including whether the web page is successfully loaded, a supported input means, etc.

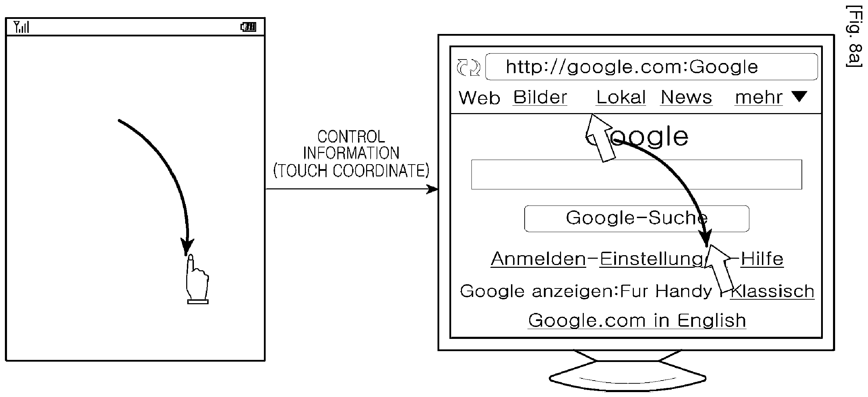

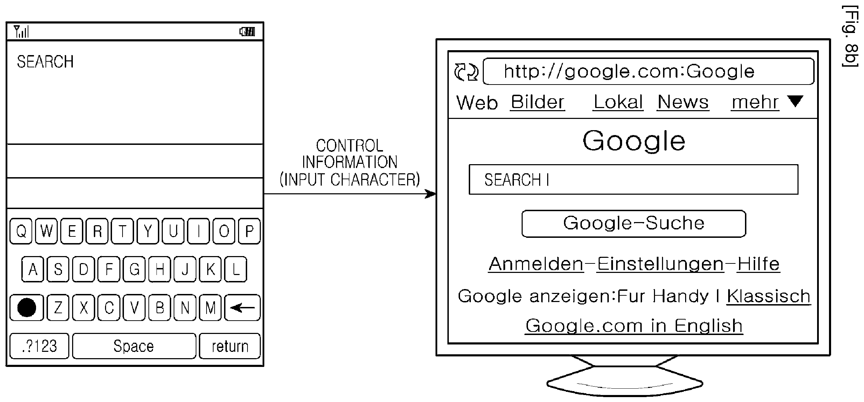

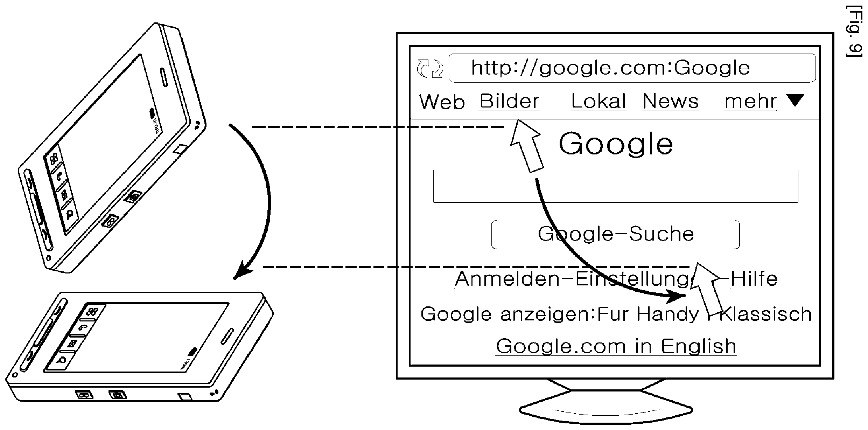

If the loading of the web page is successfully completed by the device, proceeding to step 523, in order to operate as an input element of the device, the mobile terminal determines an input means supported by the device, and transitions to a control mode corresponding to any one of input means supported by the device. In step 525, the mobile terminal analyzes user data which is input by using various sensors according to the transitioned control mode. In step 527, the mobile terminal transmits the control information to the device. For example, when the TV supports input means of a touch mouse, a keyboard, and a motion mouse, the mobile terminal can operate by transitioning to a corresponding control mode as illustrated in FIGURE 8A to FIGURE 8C. That is, the mobile terminal transitions to a control mode for operating as the mouse touch, and as illustrated in FIGURE 8A, detects a screen touch operation of the user and transmits a touch coordinate to the TV which is a sharing device. In this case, the TV can display a mouse cursor for controlling the web page by moving the mouse cursor according to the touch coordinate. In addition, the mobile terminal transitions to a control mode for operating as a keyboard for the TV, displays a keyboard for inputting a character on a screen as illustrated in FIGURE 8B, and transmits a character at a position touched by the user to the TV which is a sharing device. In this case, the TV may display a character received from the mobile terminal in a character input window, and may perform a web search function by using the displayed character. In addition, the mobile terminal transitions to a control mode for operating as a motion mouse for the TV, generates a motion vector by measuring a terminal's motion (i.e., a terminal's direction, angle, and acceleration) depending on a user motion as illustrated in FIGURE 8C, and transmits the generated motion vector to the TV which is a sharing device. In this case, the TV may move a mouse cursor for controlling the web page according to the motion vector received from the mobile terminal. Of course, in this case, the mobile terminal may transmit the motion vector by converting it into a coordinate suitable for a screen size of the TV. In addition, the mobile terminal may display a mouse on the screen, and when the user touches a left button of the mouse or a right button of the mouse, may transmit a predetermined command (e.g., selection, additional function display, etc.) for the corresponding button to the TV. In addition, although not shown, the mobile terminal may generate control information by recognizing motion or color information by using a camera sensor, and may transmit the control information to the TV.

In step 529, the mobile terminal determines whether a web page sharing end event occurs according to a user control. If the web page sharing end event dost not occur, returning to step 525, the subsequent steps are repeated. In this case, although not shown in FIGURE 5, the mobile terminal may operate by transitioning to another control mode at the request of the device, or may operate by transitioning to another control mode at the request of the user.

Otherwise, if the web page sharing end event occurs, the mobile terminal transmits a signal for reporting the end of the web page sharing to the device, and the procedure of FIGURE 5 ends.

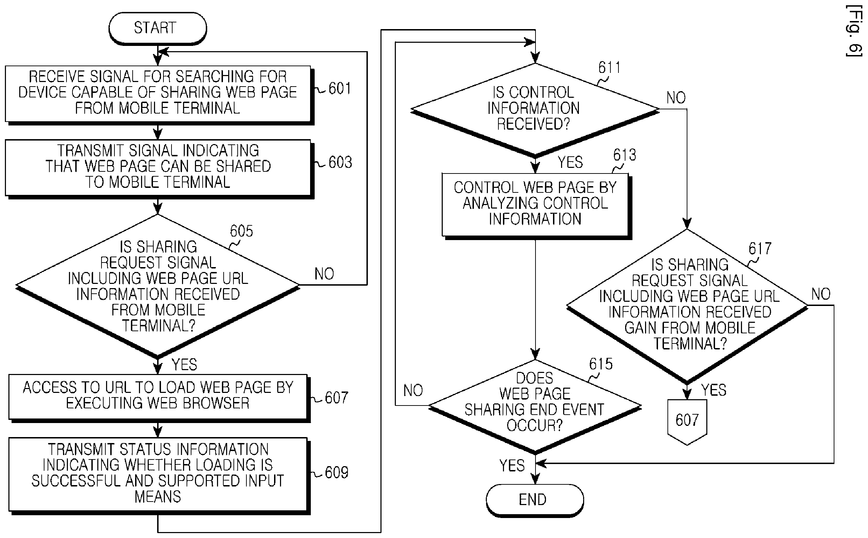

FIGURE 6 is a flowchart illustrating an operation of a device for sharing a web page according to an exemplary embodiment of the present disclosure.

Referring to FIGURE 6, the device receives a signal for searching for a device which can share the web page from a mobile terminal in step 601. In step 603, the device transmits to the motile terminal a signal for reporting that the device is capable of sharing the web page.

In step 605, the device determines whether a web page sharing request signal including a web page URL is received from the mobile terminal. If the web page sharing request signal is not received from the mobile terminal, the devices waits by a predetermined time. Then, returning to step 601, the subsequent steps are repeated.

Otherwise, if the web page sharing request signal is received, in step 607, the device executes a web browser to load a corresponding web page by accessing to a URL received from the mobile terminal. Thereafter, the device displays a web page having a resolution corresponding to a screen size of the device #1 202 on a screen. In step 609, the device transmits status information which indicates whether loading is successful and a supported input means to the mobile terminal. For example, as illustrated in FIGURE 7B, the device receives URL information of a web page from the mobile terminal, loads and displays the web page by accessing to the received URL, and thereafter transmits status information for controlling the web page and including whether the web page is successfully loaded and a supported input means.

In step 611, the device determines whether control information is received from the mobile terminal. If the control information is not received, proceeding to step 617, the device determines whether a sharing request signal including web page URL information is received again from the mobile terminal. In this case, if the sharing request signal is received again, returning to step 607, the subsequent steps are performed again, and otherwise if the sharing request signal is not received again, the procedure of FIGURE 6 ends.

Meanwhile, if the control information is received, in step 613, the device controls the web page by analyzing the control information. For example, if the device is a TV which supports an input means such as a touch mouse, a keyboard, and a motion mouse, as illustrated in FIGURE 8A to FIGURE 8C, the device can control the web page by receiving control information corresponding to the input means from the mobile terminal. That is, as illustrated in FIGURE 8A, the device may receive a touch coordinate from the mobile terminal which operates as a touch mouse, and may display a mouse cursor for controlling the web page by moving the mouse cursor according to the received touch coordinate. In addition, as illustrated in FIGURE 8B, the device may receive character information from the mobile terminal which operates as a keyboard, may display the received character in a character input window of the web page, and may perform a web search function by using the displayed character. In addition, as illustrated in FIGURE 8C, the device may receive a motion vector which indicates a terminal's motion (i.e., a terminal's direction, angle, and acceleration) from the mobile terminal which operates as a motion mouse, and may move the mouse cursor for controlling the web page according to the received motion vector. In addition, although not shown, the device may receive a predetermined command (e.g., selection, additional function display, color change, screen zoom in/out, screen rotation, go back to previous page, etc.) from the mobile terminal, and may perform a corresponding operation.

In step 615, the device determines whether a web page sharing end event occurs. If the web page sharing end event does not occur, returning to step 611, the subsequent steps are repeated, and otherwise if the web page sharing end event occurs, the procedure of FIGURE 6 ends. Herein, the web page sharing end event may occur by receiving a web page sharing end signal from the mobile terminal, and may occur by using an input element equipped in the device.

Although web content is shared between devices, and one device operates as an input element of another device in a structure of the present disclosure described above, the structure in which one device operates as the input element of another device is not limited to a case of sharing the web content. That is, in a situation where communication is possible between devices, the structure in which one device operates as the input element can be applied as described above.

According to the present disclosure, URL information of web content is used to share the web content between devices, and a device which requests to share the web content transitions to a control mode to operate as an input element of a peer device. Therefore, a user can seamlessly enjoy the web content, and can easily control a device which reproduces the web content.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

The present disclosure is defined by the appended claims.

## Claims

1. A method for sharing contents between a device and peer devices in a home network system, the method comprising, in the device:
reproducing the contents;
searching for a peer device capable of receiving the contents for content sharing (operation 210);
transmitting a sharing request signal including location information of the contents to the peer device (operation 224) so that the peer device locates the contents and displays the contents;
receiving information on at least first and second supported input means from the peer device;
transitioning to a control mode for controlling the peer device (operation 230) while transmitting the sharing request signal; and, while in the control mode:
operating as a first input means;
detecting a user control command by using at least one sensor (operation 232);
transmitting a control signal corresponding to the detected control command to the peer device (operation 234);
receiving a request to change the input means from the peer device; and
operating as a second input means.

2. The method of claim 1, wherein the transitioning to the control mode for controlling the peer device comprises:
after transmitting the sharing request signal to the peer device, receiving information on at least one input means supported by the peer device from the peer device (operation 228); and
transitioning to an input element corresponding to one of the at least one input means supported by the peer device.

3. The method of claim 2, wherein the input means includes at least one of a touch mouse, a motion mouse, a keyboard, and a microphone.

4. The method of claim 3, wherein the detecting of the user control data by using the at least one sensor comprises detecting at least one of an audio signal, a motion input image, a touch coordinate, an input character, a device direction, a device angle, and a device acceleration by using at least one of a microphone, a camera sensor, a touch sensor, a gyro sensor, and an acceleration sensor according to the input means.

5. The method of claim 1, further comprising, when reproducing the contents in the device, providing an indication of a presence of the peer device capable of sharing the contents (operation 216).

6. A method for sharing contents in a home network system, the method comprising, at a peer device:
transmitting a signal to a device for indicating that the contents can be received by the peer device for content sharing (operation 212);
receiving a sharing request signal including location information of the contents from the device;
displaying the contents after receiving the contents using the location information (operation 226);
transmitting information on at least first and second supported input means to the device;
receiving a control signal from the device;
controlling a display of the contents in accordance with the control signal (operation 236); and
transmitting a request to change the input means to the device.

7. The method of claim 6, further comprising, transmitting to the device information on input means supported by the peer device.

8. The method of claim 7, wherein the input means includes at least one of input means among a touch mouse, a motion mouse, a keyboard, and a microphone.

9. The method of claim 6, wherein control signal received from the device indicates at least one of a user audio signal, a motion, a screen coordinate, an input character, a direction of the device, an angle of the device, and an acceleration of the device.

10. The method of claim 6, wherein the receiving and reproducing of the contents comprises displaying an image of the received contents by processing the image by the use of a resolution corresponding to a screen size of the peer device.

11. A device (200) for sharing contents between the device and peer devices in a home network system, the device comprising a controller (300) configured to:
provide control to reproduce the contents;
search for a peer device (202, 204, 206) capable of receiving the contents for content sharing;
transmit a sharing request signal including location information of the contents to the peer device so that the peer device locates the contents and displays the contents;
receive information on at least first and second supported input means from the peer device;
transition to a control mode for controlling the peer device while transmitting the sharing request signal; and, while in the control mode:
detect a user control command by using at least one sensor (350);
transmit a control signal corresponding to the detected control command to the peer device;
receive a request to change the input means from the peer device; and
operate as a second input means,
the device further comprising a communication unit (310) configured to transmit and receiving a signal with the peer device (202, 204, 206) under the control of the controller (300).

12. The device of claim 11, the device arranged to implement a method of one of claims 2 to 5.

13. A sharing device (202, 204, 206) for sharing contents in a home network system, the sharing device comprising:
a display unit (420);
a controller (400) configured to provid control to transmit a signal to a device (200) for indicating that contents can be received by the sharing device, to receive a sharing request signal including location information of the contents from the device and thereafter to display, on the display unit (420), the contents after receiving the contents using the location information, to transmit information on at least first and second supported input means to the device; to receive a control signal from the device, to control a display of the contents in accordance with the control signal, and to transmit a request to change the input means to the device; and
a communication unit (410) for transmitting and receiving a signal with the device (200) under the control of the controller (400).

14. The device of claim 13, the device arranged to implement a method of one of claims 7 to 10.

## Patentansprüche

1. Verfahren zur gemeinsamen Nutzung von Inhalten zwischen einer Vorrichtung und Peer-Vorrichtungen in einem Heimnetzwerksystem, wobei das Verfahren, in der Vorrichtung, umfasst:
Reproduzieren der Inhalte;
Suchen nach einer Peer-Vorrichtung, die in der Lage ist, die Inhalte zur gemeinsamen Nutzung der Inhalte zu empfangen (Vorgang 210);
Senden eines Signals zur Anfrage der gemeinsamen Nutzung, enthaltend Lokalisierungsinformationen der Inhalte an die Peer-Vorrichtung (Vorgang 224), sodass die Peer-Vorrichtung die Inhalte lokalisiert und die Inhalte anzeigt;
Empfangen von Informationen an mindestens einem ersten und einem zweiten unterstützten Eingabemittel von der Peer-Vorrichtung;
Übergehen zu einem Steuermodus zum Steuern der Peer-Vorrichtung (Vorgang 230), während das Signal zur Anfrage der gemeinsamen Nutzung gesendet wird; und, während der Steuermodus anhält:
Operieren als ein erstes Eingabemittel;
Detektieren eines Nutzersteuerbefehls durch Verwenden mindestens eines Sensors (Vorgang 232);
Senden eines Steuersignals, entsprechend dem detektierten Steuerbefehl an die Peer-Vorrichtung (Vorgang 234);
Empfangen einer Anfrage zur Änderung der Eingabemittel von der Peer-Vorrichtung; und
Operieren als ein zweites Eingabemittel.

2. Verfahren nach Anspruch 1, wobei das Übergehen zum Steuermodus zum Steuern der Peer-Vorrichtung umfasst:
nach dem Senden des Signals zur Anfrage der gemeinsamen Nutzung an die Peer-Vorrichtung, Empfangen von Informationen an mindestens einem Eingabemittel, das von der Peer-Vorrichtung unterstützt wird, von der Peer-Vorrichtung (Vorgang 228); und
Übergehen zu einem Eingabeelement entsprechend einem des mindestens einen Eingabemittels, das von der Peer-Vorrichtung unterstützt wird.

3. Verfahren nach Anspruch 2, wobei das Eingabemittel mindestens eines einer Berührungsmaus, einer Bewegungsmaus, einer Tastatur und eines Mikrofons enthält.

4. Verfahren nach Anspruch 3, wobei das Detektieren der Nutzersteuerdaten durch Verwendung des mindestens einen Sensors das Detektieren mindestens eines eines Audiosignals, eines Bewegungseingabebilds, einer Berührungskoordinate, eines Eingabezeichens, einer Vorrichtungsrichtung, eines Vorrichtungswinkels und einer Vorrichtungsbeschleunigung mithilfe mindestens eines eines Mikrofons, eines Kamerasensors, eines Berührungsensors, eines Gyrosensors und eines Beschleunigungssensors gemäß dem Eingabemittel umfasst.

5. Verfahren nach Anspruch 1, ferner umfassend, beim Reproduzieren der Inhalte in der Vorrichtung, Bereitstellen einer Anzeige eines Vorhandenseins der Peer-Vorrichtung, die in der Lage ist, die Inhalte gemeinsam zu benutzen (Vorgang 216).

6. Verfahren zur gemeinsamen Nutzung von Inhalten in einem Heimnetzwerksystem, wobei das Verfahren, an einer Peer-Vorrichtung, umfasst:
Senden eines Signals an eine Vorrichtung, um anzuzeigen, dass die Inhalte von der Peer-Vorrichtung zur gemeinsamen Nutzung der Inhalte empfangen werden können (Vorgang 212);
Empfangen eines Signals zur Anfrage der gemeinsamen Nutzung, enthaltend Lokalisierungsinformationen der Inhalte von der Vorrichtung;
Anzeigen der Inhalte nach dem Empfangen der Inhalte mithilfe der Lokalisierungsinformationen (Vorgang 226);
Senden von Informationen über mindestens ein erstes und ein zweites unterstütztes Eingabemittel an die Vorrichtung;
Empfangen eines Steuersignals von der Vorrichtung;
Steuern einer Anzeige der Inhalte gemäß dem Steuersignal (Vorgang 236); und Senden einer Anfrage zum Ändern des Eingabemittels an die Vorrichtung.

7. Verfahren nach Anspruch 6, ferner umfassend Senden an die Vorrichtung von Informationen von durch die Peer-Vorrichtung unterstützen Eingabemitteln.

8. Verfahren nach Anspruch 7, wobei das Eingabemittel mindestens ein Eingabemittel aus einer Berührungsmaus, einer Bewegungsmaus, einer Tastatur und eines Mikrofons enthält.

9. Verfahren nach Anspruch 6, wobei das von der Vorrichtung empfangene Steuersignal mindestens eines eines Nutzeraudiosignals, einer Bewegung, einer Bildschirmkoordinate, eines Eingabezeichens, einer Richtung der Vorrichtung, eines Winkels der Vorrichtung und einer Beschleunigung der Vorrichtung anzeigt.

10. Verfahren nach Anspruch 6, wobei das Empfangen und Reproduzieren der Inhalte das Anzeigen eines Bilds der empfangenen Inhalte durch Verarbeiten des Bilds mithilfe einer Auflösung, entsprechend einer Bildschirmgröße der Peer-Vorrichtung, umfasst.

11. Vorrichtung (200) zur gemeinsamen Nutzung von Inhalten zwischen der Vorrichtung und Peer-Vorrichtungen in einem Heimnetzwerksystem, wobei die Vorrichtung eine Steuerung (300) umfasst, die konfiguriert ist, um: Steuerung zum Reproduzieren der Inhalte bereitzustellen;
nach einer Peer-Vorrichtung (202, 204, 206) zu suchen, die in der Lage ist, die Inhalte für die gemeinsame Nutzung von Inhalten zu empfangen;
ein Signal zur Anfrage der gemeinsamen Nutzung, enthaltend Lokalisierungsinformationen der Inhalte an die Peer-Vorrichtung zu senden, sodass die Peer-Vorrichtung die Inhalte lokalisiert und die Inhalte anzeigt;
Informationen über mindestens ein erstes und ein zweites Eingabemittel von der Peer-Vorrichtung zu empfangen;
zu einem Steuermodus zum Steuern der Peer-Vorrichtung überzugehen, während das Signal zur Anfrage der gemeinsamen Nutzung gesendet wird; und, während der Steuermodus anhält:
einen Nutzersteuerbefehl durch Verwendung mindestens eines Sensors (350) zu detektieren; ein Steuersignal, entsprechend dem detektierten Steuerbefehl an die Peer-Vorrichtung zu senden;
eine Anfrage zur Änderung der Eingabemittel von der Peer-Vorrichtung zu empfangen; und als ein zweites Eingabemittel zu operieren,
wobei die Vorrichtung ferner eine Kommunikationseinheit (310) umfasst, die konfiguriert ist, um ein Signal mit der Peer-Vorrichtung (202, 204, 206), die von der Steuerung (300) gesteuert wird, zu senden und zu empfangen.

12. Vorrichtung nach Anspruch 11, wobei die Vorrichtung angeordnet ist, um ein Verfahren nach einem der Ansprüche 2 bis 5 zu implementieren.

13. Vorrichtung zur gemeinsamen Nutzung (202, 204, 206) zur gemeinsamen Nutzung von Inhalten in einem Heimnetzwerksystem, wobei die Vorrichtung zur gemeinsamen Nutzung umfasst:
eine Anzeigeeinheit (420);
eine Steuerung (400), die konfiguriert ist, um Steuerung zum Senden eines Signals an eine Vorrichtung (200) bereitzustellen, um anzuzeigen, dass Inhalte von der Vorrichtung zur gemeinsamen Nutzung empfangen werden können, um ein Signal zur Anfrage zur gemeinsamen Nutzung, enthaltend Lokalisierungsinformationen der Inhalte von der Vorrichtung zu empfangen und anschließend, auf der Anzeigeeinheit (420), die Inhalte nach dem Empfang der Inhalte mithilfe der Lokalisierungsinformationen anzuzeigen, die Informationen auf mindestens einem ersten und zweiten unterstützten Eingabemittel
an die Vorrichtung zu senden; ein Steuersignal von der Vorrichtung zu empfangen, um eine Anzeige der Inhalte gemäß dem Steuersignal zu steuern, und eine Anfrage zum Ändern der Eingabemittel an die Vorrichtung zu senden; und
eine Kommunikationseinheit (410) zum Senden und Empfangen eines Signals mit der Vorrichtung (200), die von der Steuerung (400) gesteuert wird.

14. Vorrichtung nach Anspruch 13, wobei die Vorrichtung angeordnet ist, um ein Verfahren nach einem der Ansprüche 7 bis 10 zu implementieren.

## Revendications

1. Procédé de partage de contenu entre un dispositif et des dispositifs pairs dans un système de réseau domestique, le procédé comprenant, dans le dispositif :
la reproduction du contenu ;
la recherche d'un dispositif pair capable de recevoir le contenu pour le partage de contenu (opération 210) ;
la transmission d'un signal de requête de partage incluant des informations de localisation du contenu au dispositif pair (opération 224) de sorte que le dispositif pair localise le contenu et affiche le contenu ;
la réception d'informations sur au moins un premier et un deuxième moyens d'entrée supportés depuis le dispositif pair ;
la transition vers un mode de commande pour commander le dispositif pair (opération 230) pendant la transmission du signal de requête de partage ; et, tout en étant dans le mode de commande :
le fonctionnement en tant que premier moyen d'entrée ;
la détection d'une commande de prise de commande d'utilisateur en utilisant au moins un capteur (opération 232) ;
la transmission d'un signal de commande correspondant à la commande de commande détectée au dispositif pair (opération 234) ;
la réception d'une requête pour changer le moyen d'entrée depuis le dispositif pair ; et
le fonctionnement en tant que deuxième moyen d'entrée.

2. Procédé selon la revendication 1, dans lequel la transition vers le mode de commande pour commander le dispositif pair comprend :
après la transmission du signal de requête de partage au dispositif pair, la réception d'informations sur au moins un moyen d'entrée supporté par le dispositif pair depuis le dispositif pair (opération 228) ; et
la transition vers un élément d'entrée correspondant à l'un de l'au moins un moyen d'entrée supporté par le dispositif pair.

3. Procédé selon la revendication 2, dans lequel le moyen d'entrée inclut au moins l'un d'une souris tactile, une souris à déplacement, un clavier et un microphone.

4. Procédé selon la revendication 3, dans lequel la détection des données de commande d'utilisateur en utilisant l'au moins un capteur comprend la détection d'au moins l'un parmi un signal audio, une image d'entrée en mouvement,
une coordonnée de toucher, un caractère entré, une direction du dispositif, un angle du dispositif, et une accélération du dispositif en utilisant au moins l'un d'un microphone, un capteur de caméra, un capteur tactile, un capteur gyroscopique, et un capteur d'accélération en fonction du moyen d'entrée.

5. Procédé selon la revendication 1, comprenant en outre, lors de la reproduction du contenu dans le dispositif, la fourniture d'une indication d'une présence du dispositif pair capable de partager le contenu (opération 216).

6. Procédé de partage de contenu dans un système de réseau domestique, le procédé comprenant, au niveau d'un dispositif pair :
la transmission d'un signal à un dispositif pour indiquer que le contenu peut être reçu par le dispositif pair pour un partage de contenu (opération 212) ;
la réception d'un signal de requête de partage incluant des informations de localisation du contenu depuis le dispositif ;
l'affichage du contenu après réception du contenu en utilisant les informations de localisation (opération 226) ;
la transmission d'informations sur au moins un premier et un deuxième moyens d'entrée supportés au dispositif ;
la réception d'un signal de commande depuis le dispositif ;
la commande d'un affichage du contenu en fonction du signal de commande (opération 236) ; et la transmission d'une requête pour changer le moyen d'entrée au dispositif.

7. Procédé selon la revendication 6, comprenant en outre, la transmission au dispositif d'informations sur le moyen d'entré supporté par le dispositif pair.

8. Procédé selon la revendication 7, dans lequel le moyen d'entrée inclut au moins l'un d'un moyen d'entrée parmi une souris tactile, une souris à déplacement, un clavier et un microphone.

9. Procédé selon la revendication 6, dans lequel le signal de commande reçu depuis le dispositif indique au moins l'un d'un signal audio d'utilisateur, un déplacement, une coordonnée d'écran, un caractère entré, une direction du dispositif, un angle du dispositif, et une accélération du dispositif.

10. Procédé selon la revendication 6, dans lequel la réception et la reproduction du contenu comprend l'affichage d'une image du contenu reçu en traitant l'image par l'utilisation d'une résolution correspondant à une taille d'écran du dispositif pair.

11. Dispositif (200) de partage de contenu entre le dispositif et des dispositifs pairs dans un système de réseau domestique, le dispositif comprenant une unité de commande (300) configurée pour : fournir une commande pour reproduire le contenu ;
rechercher un dispositif pair (202, 204, 206) capable de recevoir le contenu pour un partage de contenu ;
transmettre un signal de requête de partage incluant des informations de localisation du contenu au dispositif pair de sorte que le dispositif pair localise le contenu et affiche le contenu ;
recevoir des informations sur au moins un premier et un deuxième moyens d'entrée supportés depuis le dispositif pair ;
faire une transition vers un mode de commande pour commander le dispositif pair pendant la transmission du signal de requête de partage ; et, tout en étant dans le mode de commande :
détecter une commande de prise de commande d'utilisateur en utilisant au moins un capteur (350) ; transmettre un signal de commande correspondant à la commande de prise de commande détectée au dispositif pair ;
recevoir une requête pour changer le moyen d'entrée depuis le dispositif pair ; et fonctionner en tant que deuxième moyen d'entrée,
le dispositif comprenant en outre une unité de communication (310) configurée pour transmettre et recevoir un signal avec le dispositif pair (202, 204, 206) sous la commande de l'unité de commande (300).

12. Dispositif selon la revendication 11, le dispositif agencé pour mettre en oeuvre un procédé selon l'une quelconque des revendications 2 à 5.

13. Dispositif de partage (202, 204, 206) destiné à partager du contenu dans un système de réseau domestique, le dispositif de partage comprenant :
une unité d'affichage (420) ;
une unité de commande (400) configurée pour fournir une commande pour transmettre un signal à un dispositif (200) pour indiquer que le contenu peut être reçu par le dispositif de partage, pour recevoir un signal de requête de partage incluant des informations de localisation du contenu depuis le dispositif et ensuite pour afficher, sur l'unité d'affichage (420), le contenu après réception du contenu en utilisant les informations de localisation, pour transmettre des informations sur au moins un premier et un deuxième moyens d'entrée supportés au dispositif ; pour recevoir un signal de commande depuis le dispositif, pour commander un affichage du contenu en fonction du signal de commande, et pour transmettre une requête de changer le moyen d'entrée au dispositif ; et
une unité de communication (410) destinée à transmettre et recevoir un signal avec le dispositif (200) sous la commande de l'unité de commande (400).

14. Dispositif selon la revendication 13, le dispositif agencé pour mettre en oeuvre un procédé selon l'une quelconque des revendications 7 à 10.
